(19)

Europäisches
Patentamt

European
Patent Office

Office européen
des brevets

(11)  **EP 4 206 354 A1**

(12)  **EUROPEAN PATENT APPLICATION**
published in accordance with Art. 153(4) EPC

(43)  Date of publication:
**05.07.2023   Bulletin 2023/27**

(21)  Application number: **21861945.0**

(22)  Date of filing: **11.08.2021**

(51)  International Patent Classification (IPC):
*C22C 38/04* (2006.01)          *C22C 38/02* (2006.01)
*C22C 38/06* (2006.01)          *C22C 38/08* (2006.01)
*C22C 38/14* (2006.01)          *C22C 38/42* (2006.01)
*C22C 38/44* (2006.01)          *C21D 8/02* (2006.01)
*C21D 9/46* (2006.01)           *B23K 11/00* (2006.01)

(52)  Cooperative Patent Classification (CPC):
**B23K 11/00; C21D 8/02; C21D 9/46; C22C 38/02;
C22C 38/04; C22C 38/06; C22C 38/08;
C22C 38/14; C22C 38/42; C22C 38/44**

(86)  International application number:
**PCT/KR2021/010628**

(87)  International publication number:
**WO 2022/045648 (03.03.2022 Gazette 2022/09)**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30)  Priority: **26.08.2020   KR 20200107995**

(71)  Applicant: **POSCO Co., Ltd
Pohang-si, Gyeongsangbuk-do 37859 (KR)**

(72)  Inventors:
• **KIM, Wan-Keun
Gwangyang-si, Jeollanam-do 57807 (KR)**
• **KIM, Duk-Gyu
Gwangyang-si, Jeollanam-do 57807 (KR)**

(74)  Representative: **Meissner Bolte Partnerschaft
mbB
Widenmayerstrasse 47
80538 München (DE)**

(54)  **HOT-ROLLED STEEL PLATE HAVING EXCELLENT IMPACT TOUGHNESS OF WELDED ZONE
AND METHOD FOR MANUFACTURING SAME**

(57)     The present invention relates to a steel sheet
suitable as a material for transporting oil and gas and,
more particularly, to a hot-rolled steel sheet having excellent impact toughness in a welded zone after electric
resistance welding (ERW), and a method for manufac-
turing same.

[Fig. 1]

EP 4 206 354 A1

**Description**

[Technical Field]

The present disclosure relates to a steel sheet suitable as a material for transporting oil and gas and the like, and more particularly, to a hot-rolled steel sheet having excellent impact toughness in a welded zone after electric resistance welding (ERW), and a method for manufacturing the same.

[Background Art]

Recently, as energy demand increases and a manufacturing technology of a steel pipe for transporting oil and gas is developed, there is a tendency to substitute an electric resistance welding (ERW) steel pipe which is favorable in terms of price competitiveness for a seamless steel pipe which corresponds to a high grade steel pipe.

An ERW steel pipe is a steel pipe manufactured by fusion welding of a base material of a hot-rolled coil without a welding material, and usually, reoxidation occurs in the center of a welded zone, and impact toughness is poor due the coarseness of a structure in a heat affected zone between a base material zone and a welded zone.

However, in order to replace steel pipes with the ERW steel pipe in areas with extremely low temperatures, like cold areas such as Siberia or Northern Canada, it is demanded to secure impact toughness in a welded zone.

Meanwhile, as a technology for securing impact toughness in a welded zone of a conventional ERW steel pipe, there is no particularly suggested method other than a method of lowering a carbon content, and a method of minimizing occurrence of reoxides by creating a non-oxidizing atmosphere during welding by spraying nitrogen, argon gas, or the like immediately before welding is currently known.

However, the technology described above is insufficient for stably securing impact toughness in a welded zone even in an environment at a -10°C temperature level, and further, in particular, a method for securing the impact toughness in a welded zone at a cryogenic temperature of -20°C or lower has not been suggested.

(Non-Patent Document 1) "Tempering Heat Treatment Effects of Steel Welds", Journal of Minerals & Materials Characterization & Engineering, Vol. 10, No.8, pp.755-764, 2011

[Disclosure]

[Technical Problem]

An aspect of the present disclosure is to provide a hot-rolled steel sheet having excellent impact toughness in a welded zone, which may provide a steel pipe having no difficulty in being applied in a cryogenic environment of about -20°C or lower, and a method for manufacturing the same.

An object of the present disclosure is not limited to the above description. The object of the present disclosure will be understood from the entire content of the present specification, and a person skilled in the art to which the present disclosure pertains will understand an additional object of the present disclosure without difficulty.

[Technical Solution]

According to an aspect of the present disclosure, a hot-rolled steel sheet includes, by weight: 0.02 to 0.05% of carbon (C), 0.05 to 0.3% of silicon (Si), 0.4 to 1.2% of manganese (Mn), 0.01% or less of phosphorus (P) (excluding 0%), 0.001% or less of sulfur (S) (excluding 0%), 0.02 to 0.05% of aluminum (Al), 0.02 to 0.06% of niobium (Nb), 0.05 to 0.3% of nickel (Ni), 0.005 to 0.03% of titanium (Ti), 0.002 to 0.008% of nitrogen (N), and 0.0015 to 0.004% of calcium (Ca), with a balance of Fe and other unavoidable impurities, wherein the steel sheet satisfies the following Relation 1,

includes polygonal ferrite in an area fraction of 35% or more (less than 100%) as a microstructure, and the crystal grain average size of high angle grains having 15° or more as measured by EBSD is 15 $\mu$m or less:

$$(\text{Relation 1})$$

$$3 \leq \text{Mn/Si} \leq 5$$

wherein Mn and Si refer to a weight content, respectively.

According to another aspect of the present disclosure, a method for manufacturing a hot-rolled steel sheet having excellent impact toughness in a welded zone includes: preparing a steel slab satisfying the alloy composition and Relation 1 described above; heating the steel slab in a temperature range of 1150 to 1300°C; finish hot rolling the heated steel slab in a temperature range of Ar3 to 950°C; after the finish hot rolling, performing cooling to a temperature range of 400 to 650°C at a cooling rate of 10°C/s or more; and after the cooling, performing coiling.

[Advantageous Effects]

According to the present disclosure, a hot-rolled steel sheet having excellent impact toughness in a welded zone during welding while having high strength may be provided.

The hot-rolled steel sheet of the present disclosure may be suitably applied in a cold area where a guarantee of impact toughness at a cryogenic temperature of -20°C or lower is required.

[Description of Drawings]

FIG. 1 is a photograph of a microstructure in a welding heat affected zone (HAZ) of Inventive Example 1, according to an exemplary embodiment in the present disclosure.

FIG. 2 is (a) a photograph in which an impact specimen (fractured part) in a welded zone of Comparative Example 6, according to an exemplary embodiment in the present disclosure is observed, and (b) results of measuring the component composition of the part (area "A" of (a) of FIG. 2).

[Best Mode for Invention]

The inventors of the present disclosure intensively studied in order to provide a material (hot-rolled steel sheet) suitable for obtaining a steel pipe which may be applied in a cold area at about -20°C or lower where guarantee of impact toughness is required.

As a result, they confirmed that a microstructure favorable to secure intended physical properties may be formed by optimizing the alloy component system and manufacturing conditions of a steel sheet, thereby completing the present disclosure. In particular, the present disclosure has a technical significance in deriving an alloy component system which may minimize formation of a reoxide in a welded zone after welding a steel sheet.

Hereinafter, the present disclosure will be described in detail.

The hot-rolled steel sheet having excellent impact toughness in a welded zone according to an aspect of the present disclosure may include, by weight: 0.02 to 0.05% of carbon (C), 0.05 to 0.3% of silicon (Si), 0.4 to 1.2% of manganese (Mn), 0.01% or less of phosphorus (P) (excluding 0%), 0.001% or less of sulfur (S) (excluding 0%), 0.02 to 0.05% of aluminum (Al), 0.02 to 0.06% of niobium (Nb), 0.05 to 0.3% of nickel (Ni), 0.005 to 0.03% of titanium (Ti), 0.002 to 0.008% of nitrogen (N), and 0.0015 to 0.004% of calcium (Ca).

Hereinafter, the reason that the alloy composition of the hot-rolled steel sheet provided in the present disclosure is limited as described above will be described in detail.

Meanwhile, unless otherwise particularly stated in the present disclosure, the content of each element is by weight and the ratio of the structure is by area.

Carbon (C): 0.02 to 0.05%

Carbon (C) is an element which is the most economical and effective for strengthening steel. When the content of C is less than 0.2%, it is bonded to Nb or Ti in steel, so that an effect of strengthening steel becomes insufficient, while when the content is more than 0.05%, the toughness in a base material and a welded zone is deteriorated.

Therefore, C may be included at 0.02 to 0.05%.

Silicon (Si): 0.05 to 0.3%

Silicon (Si) is an element effective for deoxidation and solid solution strengthening, and in order to sufficiently obtain the effect, may be included at 0.05% or more. However, when the content is more than 0.3%, an inclusion is excessively formed to deteriorate weldability and impact toughness in a welded zone.

Therefore, Si may be included at 0.05 to 0.3%. More favorably, it may be included at 0.10 to 0.27%.

Manganese (Mn) : 0.4 to 1.2%

Manganese (Mn) is an element which is essentially added for securing strength and toughness in steel. When the content of Mn is more than 0.4%, it is difficult to secure a target level of strength, while when the content is more than 1.2%, central segregation is promoted during soft casting, or an excessive amount of reoxides are formed during welding, so that there is a possibility to deteriorate impact toughness.

Therefore, Mn may be included at 0.4 to 1.2%. More favorably, it may be included at 0.5 to 1.15%.

Phosphorus (P): 0.01% or less (excluding 0%)

Phosphorus (P) is an element which is unavoidably added to steel, and when the content is more than 0.01%, central segregation with manganese (Mn) is promoted during soft casting, so that there is a possibility to deteriorate impact toughness and also deteriorate weldability.

Therefore, P may be limited to 0.01% or less, but considering the level of being unavoidably added, 0% may be excluded.

Sulfur (S): 0.001% or less (excluding 0%)

Sulfur (S) is an element which is unavoidably added to steel, and has a problem of being bonded to Mn in steel to form a non-metal inclusion (e.g., MnS), thereby greatly deteriorating brittleness of steel. In particular, when the content of S is more than 0.001%, the impact toughness in a welded zone is greatly deteriorated.

Therefore, S may be limited to 0.001% or less, but considering the level of being unavoidably added, 0% may be excluded.

Aluminum (Al): 0.02 to 0.05%

Aluminum (Al) is an element useful for a deoxidation action with silicon (Si), and when the content is less than 0.02%, it is difficult to sufficiently obtain the deoxidation effect. Meanwhile, when the content of Al is more than 0.05%, an alumina inclusion is increased to deteriorate impact toughness in a welded zone, which is thus not preferred.

Therefore, Al may be included at 0.02 to 0.05%.

Niobium (Nb): 0.02 to 0.06%

Niobium (Nb) is an element showing a precipitation strengthening effect even with addition of a small amount, and when the content is 0.02% or more, the effect may be sufficiently obtained. Meanwhile, when the content of Nb is more than 0.06% within a carbon (C) range suggested in the present disclosure, precipitates are excessively formed to deteriorate impact toughness and weldability.

Therefore, Nb may be included at 0.02 to 0.06%.

Nickel (Ni): 0.05 to 0.3%

Nickel (Ni) is an element favorable to improve strength and secure toughness in steel. In order to sufficiently obtain the effect, it is necessary to include Ni at 0.05% or more, but when the content is excessive and more than 0.3%, there is an increased risk of decreasing impact toughness by formation of a secondary phase.

Therefore, Ni may be included at 0.05 to 0.3%.

Titanium (Ti): 0.005 to 0.03%

Titanium (Ti) is bonded to nitrogen (Ni) in steel and precipitated as TiN to suppress growth of austenite crystal grains during reheating, and thus, is favorable to secure high strength and excellent impact toughness. In addition, it is precipitated as a precipitate such as TiC to serve to strengthen steel.

It is favorable to include Ti at 0.005% or more within the carbon (C) range suggested in the present disclosure, for obtaining the effect described above. However, when the content is more than 0.03%, the effect is saturated, but rather a coarse precipitate is formed to deteriorate impact toughness in a welded zone.

Therefore, Ti may be included at 0.005 to 0.03%.

Nitrogen (N): 0.002 to 0.008%

Nitrogen (N) is bonded to Ti in steel and precipitated as TiN to suppress growth of austenite crystal grains. When the content of N is less than 0.002%, the effect described above may not sufficiently obtained, while when the content is more than 0.008%, impact toughness in a welded zone may be deteriorated due to the precipitation of coarse TiN.

Therefore, N may be included at 0.002 to 0.008%.

Calcium (Ca): 0.0015 to 0.004%

Calcium (Ca) is an element to promote separation/floating of an inclusion in molten steel during soft casting, by spherodizing the shape of an emulsion-based inclusion. When the content of Ca is less than 0.0015%, it is difficult to sufficiently obtain the effect described above, while when the content is more than 0.004%, the formation of a non-metal inclusion is rather promoted, so that the inclusion is introduced to the welded zone formed during welding to deteriorate impact toughness.

Therefore, Ca may be included at 0.0015 to 0.004%.

It is preferred that the hot-rolled steel sheet of the present disclosure has the contents of Mn and Si satisfying the following Relation 1, while satisfying the alloy composition described above:

$$(\text{Relation 1})$$

$$3 \leq \text{Mn/Si} \leq 5$$

wherein Mn and Si refer to a weight content, respectively.

The steel sheet of the present disclosure contains certain Si and Mn as described above, and when the steel sheet as such is subjected to electric resistance welding (ERW) of performing welding by dissolving only a base material without a separate welding material, there is a possibility to form a Mn-Si-O oxide in a welded zone, and in this case, the toughness in the base material and the welded zone is deteriorated.

Thus, the formation of the Mn-Si-O oxide may be suppressed by controlling a content ratio of Si and Mn (Mn/Si) as described in Relation 1 within the range of Si and Mn suggested in the present disclosure, and as a result, the toughness in the welded zone after ERW as well as of the base material may be secured to a target level.

The present disclosure may further include one or more of copper (Cu), chromium (Cr), molybdenum (Mo), and vanadium (V), in terms of favorably securing the physical properties of a steel sheet, in addition to the alloying elements described above.

Copper (Cu) may be added for promoting improvement of corrosion resistance and toughness together with an increase in strength by solid solution strengthening, and chromium (Cr), which is an element having high hardenability, may be added for improving strength by transformation strengthening. In addition, molybdenum (Mo) is an element having hardenability higher than Cr, and is favorable for strength increase even with addition of a small amount. Vanadium (V) is favorable to secure strength by precipitation strengthening and suppress the growth of crystal grains.

In the present disclosure, the elements may be included at 1.0% or less as the sum of contents.

The remaining component of the present disclosure is iron (Fe). However, since in the common manufacturing process, unintended impurities may be inevitably incorporated from raw materials or the surrounding environment, the component may not be excluded. Since these impurities are known to any person skilled in the common manufacturing process, the entire contents thereof are not particularly mentioned in the present specification.

The hot-rolled steel sheet of the present disclosure satisfying the alloy composition and Relation 1 described above may include polygonal ferrite as a matrix structure in a microstructure.

Specifically, it is preferred that the hot-rolled steel sheet includes polygonal ferrite in an area fraction of 35% or more, it is noted that this is not a polygonal ferrite single-phase structure.

When the fraction of polygonal ferrite is less than 35%, the toughness in the base material and in the welded zone may be deteriorated, while when the polygonal ferrite is a single-phase structure, it is difficult to secure a target level of strength.

The residual structure other than the polygonal ferrite may be one or more of acicular ferrite, bainite, and pearlite. The fraction of each phase forming the residual structure is not particularly limited, and may be properly formed depending on the content of each element within the alloy composition range suggested in the present disclosure.

The hot-rolled steel sheet of the present disclosure having the structure configuration as described above may have the crystal grain average size of high angle grains, having 15° or more, which is 15 um or less as measured with electron backscatter diffraction (EBSD), and may have favorably improved strength and toughness by finely distributing crystal grains as such.

In the present disclosure, crystal grains having the crystal grain average size of high angle grains, having 15° or more, which is 15 um or less may be referred to as effective crystal grains.

Specifically, the hot-rolled steel sheet of the present disclosure may have a yield strength of 300 to 600 MPa, and an impact energy value in a welded zone during welding when the hot-rolled steel sheet is welded by an electric resistance welding (ERW) method has an excellent toughness effect at a cryogenic temperature, which is 50 J or more at -30°C.

In the electric resistance welding (ERW), as an example, the hot-rolled steel sheet may be manufactured into a pipe shape and then welded to form a welded zone.

Meanwhile, the hot-rolled steel sheet of the present disclosure may have a thickness of 15 mm or less, preferably 6 to 15 mm. When the thickness of the hot-rolled steel sheet is more than 15 mm, a coiling process may be not easy, and there may be a difficulty in securing low temperature impact toughness in a welded zone by occurrence of welding defects due to an increased bonded area during electric resistance welding.

Hereinafter, a method for manufacturing a hot-rolled steel sheet having excellent impact toughness in a welded zone, which is another aspect of the present disclosure, will be described in detail.

Briefly, in the present disclosure, a desired steel slab may be manufactured by processes of [preparation and heating a steel slab - hot rolling - cooling - coiling], and the condition of each step will be described later in detail.

First, a steel slab satisfying the alloy composition described above and Relation 1 may be prepared and heated at a specific temperature.

The steel slab may be manufactured by refining molten steel and continuously casting the steel, and the refining of molten steel may be performed under common conditions, but the formation of a non-metal inclusion may be controlled by controlling process conditions in a second refining process. For example, in the second refining process, the inclusion may be controlled by Ar bubbling in LF and Ar bubbling in a degassing process such as VTD or RH. However, it is apparent that it is a method of controlling the non-metal inclusion in the refining process is not limited thereto, and may be performed in various manners.

In heating the steel slab prepared as described above, the heating temperature may be determined by the solid solution temperature of a Nb-based precipitate by Nb contained in steel. The entire Nb may be solid-solubilized at 1150°C or higher within the alloy composition range of the present disclosure. Meanwhile, when the heating temperature is higher than 1300°C, the crystal grain size of the manufactured steel sheet is very increased to deteriorate toughness in a heat affected zone near the welded zone.

Therefore, the steel slab may be heated at 1150 to 1300°C.

The steel slab heated as described above may be hot rolled to manufacture a hot-rolled steel sheet, and finish hot rolling may be performed in a temperature range of Ar3 to 950°C.

When the temperature is higher than 950°C in the finish hot rolling, growth of non-uniform and coarse crystal grains is very likely to occur, resulting in deterioration of toughness. However, when the temperature is lower than Ar3, texture inferior in brittle fracture is produced to lower toughness in a heat affected zone.

Meanwhile, when the hot-rolled steel sheet is manufactured by the hot rolling, a reduction rate at a non-recrystallization temperature or lower in the manufacture of the hot-rolled steel sheet by the hot rolling may have a significant influence on the crystal grain size and homogeneity of a hot-rolled steel sheet microstructure. In particular, the crystal grain size and the homogeneity of the hot-rolled steel sheet microstructure are highly correlated to the crystal grain size and the impact toughness in the heat affected zone near the welded zone after welding. Thus, in the present disclosure, the reduction rate during hot rolling at a non-recrystallization temperature or lower is controlled to control the crystal grain size and the homogeneity of the microstructure.

Specifically, in the present disclosure, the cumulative reduction rate during the finish hot rolling is controlled to 70% or more. When the reduction rate is less than 70%, the homogeneity of the crystal grain size may be deteriorated. The upper limit of the reduction rate is not particularly limited, and a maximum reduction rate may be set depending on the thickness of the targeted hot-rolled steel sheet.

The hot-rolled steel sheet manufactured as described above may be cooled and then wound.

It is preferred that the cooling is started at Ar3 or higher, immediately completing the finish hot rolling. When the cooling is started at lower than Ar3, coarse ferrite may be formed before cooling to deteriorate the toughness in a base material and in a welding heat affected zone.

In addition, the cooling may be performed at a rate of 10°C/s or more for securing strength and toughness by forming a targeted microstructure. The upper limit of the cooling rate during the cooling is not particularly limited, but considering the specification of a cooling facility, cooling may be performed at 50°C/s or less.

In the present disclosure, the cooling may be finished in a temperature range of 400 to 650°C, and it is preferred that the coiling be performed at that temperature.

When the cooling end temperature, that is, a coiling temperature is lower than 400°C, the stiffness of a steel sheet is increased, so that normal coiling becomes very difficult, while when the temperature is higher than 650°C, coarse pearlite and precipitates are formed to deteriorate impact toughness in base material as well as in a welding heat affected zone.

The hot-rolled steel sheet of the present disclosure manufactured as described above includes polygonal ferrite as a main phase in a microstructure, and includes one or more of acicular ferrite, pearlite, and bainite as other residual structures, and may have an effective crystal grain size of 15 $\mu$m or less.

The hot-rolled steel sheet of the present disclosure as such may be manufactured into a steel pipe having no difficulty in being applied in a cold area and the like while having high strength. Specifically, the hot-rolled steel sheet may be manufactured into a steel pipe by electric resistance welding (ERW), and the steel pipe has excellent impact toughness properties in a welded zone.

Here, the electric resistance welding (ERW) may be performed under common conditions, and thus, the conditions are not particularly limited.

Hereinafter, the present disclosure will be specifically described through the following Examples. However, it should be noted that the following Examples are only for describing the present disclosure in detail by illustration, and are not intended to limit the right scope of the present disclosure. The reason is that the right scope of the present disclosure is determined by the matters described in the claims and reasonably inferred therefrom.

[Mode for Invention]

(Examples)

Molten steel having the alloy composition shown in the following Table 1 was refined to manufacture a steel slab having a controlled non-metal inclusion, which was subjected to [heating - hot rolling - cooling and coiling] under the conditions shown in the following Table 2, thereby manufacturing a hot-rolled steel sheet having a final thickness of 6 to 15 mm.

Thereafter, a specimen was manufactured for each hot-rolled steel sheet in a direction perpendicular to a rolling direction, the type of phases of a microstructure for each specimen was confirmed by an optical microscope, an image analyzer, and EBSD, after nital corrosion, and the fraction and the crystal grain size of each phase were measured.

In addition, a room temperature tensile test was performed on the same specimen to measure a yield strength (YS).

Meanwhile, each hot-rolled steel sheet was manufactured into a pipe having a 12 to 20 diameter, and then electric resistance welding (ERW, power: about 500 KW, line speed: 16 to 20 mpm) was performed. The wended zone including a welding heat affected zone (HAZ) formed after the welding was subjected to a Charpy impact test from -20°C to -60°C

[Table 1]

| Steel type | Alloy composition (wt%) | | | | | | | | | | | | | | Relation 1 |
|---|---|---|---|---|---|---|---|---|---|---|---|---|---|---|---|
| | C | Si | Mn | P | S | Al | Cr | Mo | Cu | Ni | Ti | Nb | N* | Ca* | |
| 1 | 0.046 | 0.26 | 1.1 | 0.007 | 0.0009 | 0.030 | 0 | 0 | 0 | 0.15 | 0.010 | 0.050 | 48 | 18 | 4.23 |
| 2 | 0.038 | 0.21 | 1.0 | 0.007 | 0.0008 | 0.027 | 0.1 | 0 | 0 | 0.10 | 0.010 | 0.040 | 42 | 20 | 4.76 |
| 3 | 0.041 | 0.19 | 0.9 | 0.007 | 0.0009 | 0.029 | 0.12 | 0 | 0.13 | 0.15 | 0.012 | 0.045 | 43 | 24 | 4.74 |
| 4 | 0.037 | 0.16 | 0.6 | 0.006 | 0.0007 | 0.024 | 0.2 | 0.1 | 0 | 0.25 | 0.021 | 0.052 | 40 | 21 | 3.75 |
| 5 | 0.060 | 0.21 | 0.9 | 0.007 | 0.0007 | 0.025 | 0.2 | 0 | 0 | 0.17 | 0.021 | 0.045 | 43 | 26 | 4.29 |
| 6 | 0.045 | 0.35 | 0.8 | 0.006 | 0.0008 | 0.024 | 0.3 | 0 | 0 | 0.11 | 0.015 | 0.035 | 41 | 31 | 2.29 |
| 7 | 0.042 | 0.25 | 1.26 | 0.005 | 0.0006 | 0.021 | 0 | 0 | 0 | 0.23 | 0.012 | 0.050 | 52 | 25 | 5.04 |
| 8 | 0.035 | 0.18 | 1.1 | 0.008 | 0.0008 | 0.040 | 0.15 | 0 | 0 | 0.35 | 0.010 | 0.040 | 49 | 19 | 6.11 |
| 9 | 0.041 | 0.24 | 0.8 | 0.009 | 0.0007 | 0.035 | 0.13 | 0 | 0.1 | 0.14 | 0.035 | 0.034 | 39 | 25 | 3.33 |
| 10 | 0.043 | 0.22 | 1.0 | 0.007 | 0.0009 | 0.026 | 0.15 | 0 | 0 | 0.15 | 0.010 | 0.050 | 47 | 45 | 4.55 |
| 11 | 0.037 | 0.26 | 1.15 | 0.006 | 0.0007 | 0.028 | 0.12 | 0 | 0 | 0.21 | 0.022 | 0.069 | 40 | 23 | 4.42 |

N* and Ca* are expressed in "ppm".

EP 4 206 354 A1

[Table 2]

| Steel type | Heating (°C) | Hot rolling | | Cooling rate (°C/s) | coiling temperature (°C) | Classification |
|---|---|---|---|---|---|---|
| | | Finish temperature (°C) | Reduction rate (%) | | | |
| 1 | 1291 | 871 | 74 | 24 | 556 | Inventive Example 1 |
| 1 | 1332 | 871 | 74 | 24 | 554 | Comparative Example 1 |
| 1 | 1231 | 969 | 74 | 32 | 556 | Comparative Example 2 |
| 2 | 1221 | 868 | 82 | 36 | 524 | Inventive Example 2 |
| 2 | 1278 | 921 | 82 | 27 | 674 | Comparative Example 3 |
| 3 | 1278 | 891 | 78 | 35 | 576 | Inventive Example 3 |
| 4 | 1286 | 936 | 88 | 38 | 612 | Inventive Example 4 |
| 5 | 1251 | 854 | 74 | 31 | 561 | Comparative Example 4 |
| 6 | 1236 | 867 | 88 | 34 | 578 | Comparative Example 5 |
| 7 | 1279 | 888 | 88 | 39 | 542 | Comparative Example 6 |
| 8 | 1260 | 891 | 82 | 32 | 531 | Comparative Example 7 |
| 9 | 1291 | 879 | 78 | 37 | 514 | Comparative Example 8 |
| 10 | 1263 | 891 | 82 | 29 | 598 | Comparative Example 9 |
| 11 | 1285 | 882 | 88 | 36 | 562 | Comparative Example 10 |

[Table 3]

| Classification | Base material | | | | Welded zone | |
|---|---|---|---|---|---|---|
| | Yield strength (MPa) | Structure phase type | Structure fraction (% by area) | Crystal grain size ($\mu$m) | Impact test temperature (°C) | Impact energy (J) |
| Inventive Example 1 | 524 | AF/PF/B | 53/39/8 | 8.9 | -60 | 192 |
| Comparative Example 1 | 498 | AF/PF | 59/41 | 19 | -20 | 26 |
| Comparative Example 2 | 504 | AF/PF/P | 55/43/2 | 18 | -20 | 31 |
| Inventive Example 2 | 501 | AF/PF | 61/39 | 7.6 | -45 | 254 |

(continued)

| Classification | Base material | | | | Welded zone | |
|---|---|---|---|---|---|---|
| | Yield strength (MPa) | Structure phase type | Structure fraction (% by area) | Crystal grain size ($\mu$m) | Impact test temperature (°C) | Impact energy (J) |
| Comparative Example 3 | 488 | PF/AF | 66/34 | 11 | -20 | 17 |
| Inventive Example 3 | 484 | AF/PF/P | 33/66/1 | 10.4 | -50 | 175 |
| Inventive Example 4 | 475 | PF/P | 97/3 | 11.2 | -45 | 169 |
| Comparative Example 4 | 514 | AF/PF/B | 55/39/6 | 12.6 | -20 | 41 |
| Comparative Example 5 | 479 | PF/P | 95/5 | 7.9 | -20 | 14 |
| Comparative Example 6 | 532 | AF/PF/B | 56/32/12 | 8.6 | -20 | 9 |
| Comparative Example 7 | 506 | AF/PF/P | 57/42/1 | 9.4 | -20 | 43 |
| Comparative Example 8 | 486 | PF/AF | 64/36 | 10.6 | -20 | 34 |
| Comparative Example 9 | 504 | AF/PF/P | 56/42/2 | 8.4 | -20 | 27 |
| Comparative Example 10 | 516 | AF/PF/B | 57/38/5 | 7.8 | -20 | 8 |
| AF: Acicular ferrite PF: Polygonal ferrite B: Bainite P: Pearlite | | | | | | |

As shown in Tables 1 to 3, Inventive Examples 1 to 4 satisfying all of the alloy composition, Relation 1, and manufacturing conditions suggested in the present disclosure included a certain fraction or more of polygonal ferrite as a steel sheet structure, and formed effective crystal grains having a crystal grain size of 15 $\mu$m or less, and thus, were confirmed to secure a target level of strength.

Furthermore, when the steel sheet is subjected to electric resistance welding, considering that Charpy impact energy was 100 J or more (up to 254 J) in a cryogenic environment of -20°C or lower, the present disclosure has an effect of providing a steel pipe which may be applied in a cold area.

However, Comparative Examples 1 to 3 in which the alloy composition and Relation 1 were satisfied, but the manufacturing process was outside of the scope of the present disclosure had poor impact toughness in a welded zone in all cases. Among them, Comparative Examples 1 and 2 also showed the results of coarse effective crystal grain sizes.

Meanwhile, in Comparative Examples 4 to 10, one or more of the alloy composition suggested in the present disclosure and Relation 1 were outside of the scope of the present disclosure.

In Comparative Example 4, the C content was excessive, and targeted strength was obtained, but the impact toughness in a welded zone was poor. In Comparative Examples 5 and 6, each content of Si and Mn was excessive, and the Mn/Si content ratio was outside of the scope of the present disclosure, and thus, the impact toughness in a welded zone was poor. This resulted from the increased possibility of reoxide formation in a welded zone. In Comparative Example 7, Ni was excessively added, and the Mn/Si content ratio was outside of the scope of the present disclosure, and thus, the impact toughness in a welded zone was poor. In Comparative Example 8, the Ti content was excessive and in Comparative Example 10, the Nb content was excessive, and both cases had poor impact toughness in a welded zone by formation of an excessive amount of precipitates. In Comparative Example 9, the Ca content was excessive, and impact toughness was poor, resulting from the introduction of an inclusion into the welded zone.

The electric resistance welding (ERW) is welding by dissolving a base material without using a welded material, and it was found that the alloy composition of a base material has a great influence on the physical properties of a welded zone during ERW welding, as shown in the above results.

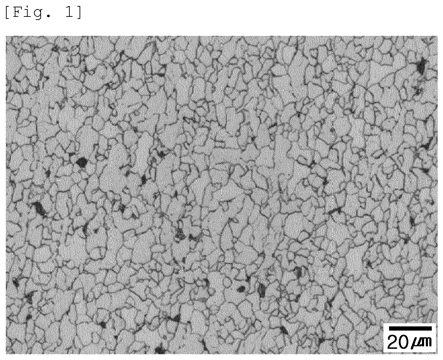

FIG. 1 is a photograph of a microstructure in a welding heat affected zone (HAZ) of Inventive Example 1.

As shown in FIG. 1, it was confirmed that the crystal grains of the microstructure were uniform and fine, and the effective crystal grain size was 15 $\mu$m or less.

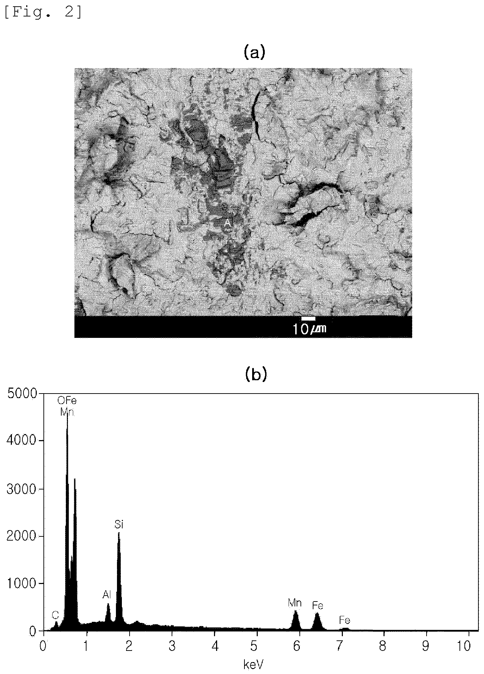

FIG. 2 shows (a) a photograph in which an impact specimen (fractured part) in a welded zone of Comparative Example 6 is observed, and (b) the results of measuring the component composition of the part (area "A" of (a) of FIG. 2).

As shown in FIG. 2, it was confirmed that the contents of Mn, Si, Al, and O were high in fracture areas, which was expected to be due to the formation of reoxides having Mn-Si-Al-O components in a welded zone bondline.

**Claims**

1. A hot-rolled steel sheet having excellent impact toughness in a welded zone, comprising, by weight: 0.02 to 0.05% of carbon (C), 0.05 to 0.3% of silicon (Si), 0.4 to 1.2% of manganese (Mn), 0.01% or less of phosphorus (P) (excluding 0%), 0.001% or less of sulfur (S) (excluding 0%), 0.02 to 0.05% of aluminum (Al), 0.02 to 0.06% of niobium (Nb), 0.05 to 0.3% of nickel (Ni), 0.005 to 0.03% of titanium (Ti), 0.002 to 0.008% of nitrogen (N), and 0.0015 to 0.004% of calcium (Ca), with a balance of Fe and other unavoidable impurities,

   wherein the steel sheet satisfies the following Relation 1 and includes polygonal ferrite in an area fraction of 35% or more (less than 100%) as a microstructure, and the crystal grain average size of high angle grains having 15° or more as measured by EBSD is 15 $\mu$m or less:

$$(Relation\ 1)$$

$$3 \leq Mn/Si \leq 5$$

   wherein Mn and Si refer to a weight content, respectively.

2. The hot-rolled steel sheet having excellent impact toughness in a welded zone of claim 1, further optionally comprising: at least one of copper (Cu), chromium (Cr), molybdenum (Mo), and vanadium (V), a total content thereof being 1.0% or less.

3. The hot-rolled steel sheet of claim 1 having excellent impact toughness in a welded zone, wherein the hot-rolled steel sheet includes one or more of acicular ferrite, bainite, and pearlite as a residual structure other than the polygonal ferrite.

4. The hot-rolled steel sheet of claim 1 having excellent impact toughness in a welded zone, wherein the hot-rolled steel sheet has a yield strength of 300 to 600 MPa.

5. The hot-rolled steel sheet of claim 1 having excellent impact toughness in a welded zone, wherein an impact energy value of the welded zone after welding the hot-rolled steel sheet by an electric resistance welding (ERW) method is 50 J or more at -30°C.

6. A method for manufacturing a hot-rolled steel sheet having excellent impact toughness in a welded zone, the method comprising:

   preparing a steel slab which includes, by weight: 0.02 to 0.05% of carbon (C), 0.05 to 0.3% of silicon (Si), 0.4 to 1.2% of manganese (Mn), 0.01% or less of phosphorus (P) (excluding 0%), 0.001% or less of sulfur (S) (excluding 0%), 0.02 to 0.05% of aluminum (Al), 0.02 to 0.06% of niobium (Nb), 0.05 to 0.3% of nickel (Ni), 0.005 to 0.03% of titanium (Ti), 0.002 to 0.008% of nitrogen (N), and 0.0015 to 0.004% of calcium (Ca), with a balance of Fe and other unavoidable impurities, and satisfies the following Relation 1;
   heating the steel slab in a temperature range of 1150 to 1300°C;
   finish hot rolling the heated steel slab in a temperature range of Ar3 to 950°C;
   after the finish hot rolling, performing cooling to a temperature range of 400 to 650°C at a cooling rate of 10°C/s or more; and
after the cooling, performing coiling:

$$(Relation\ 1)$$

$$3 \leq Mn/Si \leq 5$$

wherein Mn and Si refer to a weight content, respectively.

7.  The method for manufacturing a hot-rolled steel sheet having excellent impact toughness in a welded zone of claim 6, wherein the finish hot rolling is performed to a cumulative reduction rate of 70% or more.

8.   The method for manufacturing a hot-rolled steel sheet having excellent impact toughness in a welded zone of claim 6, wherein the cooling is started at Ar3 or higher immediately after the finish hot rolling.

9.  The method for manufacturing a hot-rolled steel sheet having excellent impact toughness in a welded zone of claim 6, wherein the steel slab further optionally includes at least one of copper (Cu), chromium (Cr), molybdenum (Mo), and vanadium (V), a total content thereof being 1.0% or less.

[Fig. 1]

[Fig. 2]

(a)

10 μm

(b)

## INTERNATIONAL SEARCH REPORT

| International application No. |
| --- |
| **PCT/KR2021/010628** |

**A. CLASSIFICATION OF SUBJECT MATTER**

**C22C 38/04**(2006.01)i; **C22C 38/02**(2006.01)i; **C22C 38/06**(2006.01)i; **C22C 38/08**(2006.01)i; **C22C 38/14**(2006.01)i; **C22C 38/42**(2006.01)i; **C22C 38/44**(2006.01)i; **C21D 8/02**(2006.01)i; **C21D 9/46**(2006.01)i; **B23K 11/00**(2006.01)i

According to International Patent Classification (IPC) or to both national classification and IPC

**B. FIELDS SEARCHED**

Minimum documentation searched (classification system followed by classification symbols)

C22C 38/04(2006.01); C21D 8/02(2006.01); C21D 9/46(2006.01); C22C 38/00(2006.01); C22C 38/14(2006.01); C22C 38/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열연강판(hot rolled steel sheet), 폴리고날 페라이트(polygonal ferrite), 규소 (silicon), 망간(manganese), 용접(weld)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2009-0109571 A (NIPPON STEEL CORPORATION) 20 October 2009 (2009-10-20)<br>See paragraphs [0102], [0109] and [0124] and claims 1 and 3-5. | 1-9 |
| A | KR 10-2018-0073385 A (POSCO) 02 July 2018 (2018-07-02)<br>See paragraphs [0094]-[0095] and claims 1 and 3. | 1-9 |
| A | JP 2006-274317 A (KOBE STEEL LTD.) 12 October 2006 (2006-10-12)<br>See paragraph [0015] and claims 1 and 5. | 1-9 |
| A | KR 10-2014-0042107 A (HYUNDAI STEEL COMPANY) 07 April 2014 (2014-04-07)<br>See paragraph [0078] and claim 1. | 1-9 |
| A | JP 2008-013808 A (JFE STEEL K.K.) 24 January 2008 (2008-01-24)<br>See paragraphs [0017]-[0018] and claims 1-2. | 1-9 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **29 November 2021** | **29 November 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/010628**

| Patent document cited in search report | | | Publication date (day/month/year) | Patent family member(s) | | | Publication date (day/month/year) |
|---|---|---|---|---|---|---|---|
| KR | 10-2009-0109571 | A | 20 October 2009 | CA | 2680036 | A1 | 12 September 2008 |
| | | | | CA | 2680036 | C | 07 August 2012 |
| | | | | CN | 101631887 | A | 20 January 2010 |
| | | | | CN | 101631887 | B | 24 August 2011 |
| | | | | EP | 2133441 | A1 | 16 December 2009 |
| | | | | EP | 2133441 | B1 | 03 May 2017 |
| | | | | JP | 2008-248384 | A | 16 October 2008 |
| | | | | JP | 5223379 | B2 | 26 June 2013 |
| | | | | KR | 10-1139540 | B1 | 26 April 2012 |
| | | | | TW | 200904997 | A | 01 February 2009 |
| | | | | TW | I361837 | B | 11 April 2012 |
| | | | | US | 2010-0059149 | A1 | 11 March 2010 |
| | | | | US | 9062356 | B2 | 23 June 2015 |
| | | | | WO | 2008-108487 | A1 | 12 September 2008 |
| KR | 10-2018-0073385 | A | 02 July 2018 | CN | 110114495 | A | 09 August 2019 |
| | | | | EP | 3561129 | A1 | 30 October 2019 |
| | | | | JP | 2020-509181 | A | 26 March 2020 |
| | | | | JP | 6886519 | B2 | 16 June 2021 |
| | | | | KR | 10-1940880 | B1 | 21 January 2019 |
| | | | | US | 2020-0239977 | A1 | 30 July 2020 |
| | | | | WO | 2018-117450 | A1 | 28 June 2018 |
| | | | | WO | 2018-117450 | A8 | 03 January 2019 |
| JP | 2006-274317 | A | 12 October 2006 | AT | 520794 | T | 15 September 2011 |
| | | | | CN | 101120113 | A | 06 February 2008 |
| | | | | CN | 101120113 | B | 03 October 2012 |
| | | | | CN | 101906567 | A | 08 December 2010 |
| | | | | CN | 101906567 | B | 02 July 2014 |
| | | | | EP | 1865083 | A1 | 12 December 2007 |
| | | | | EP | 1865083 | B1 | 17 August 2011 |
| | | | | EP | 2351867 | A1 | 03 August 2011 |
| | | | | JP | 2006-274318 | A | 12 October 2006 |
| | | | | JP | 3889765 | B2 | 07 March 2007 |
| | | | | JP | 3889766 | B2 | 07 March 2007 |
| | | | | KR | 10-0942087 | B1 | 12 February 2010 |
| | | | | KR | 10-0942088 | B1 | 12 February 2010 |
| | | | | KR | 10-2007-0107167 | A | 06 November 2007 |
| | | | | KR | 10-2009-0050105 | A | 19 May 2009 |
| | | | | US | 2009-0050243 | A1 | 26 February 2009 |
| | | | | US | 2011-0297281 | A1 | 08 December 2011 |
| | | | | US | 8038809 | B2 | 18 October 2011 |
| | | | | US | 8486205 | B2 | 16 July 2013 |
| | | | | WO | 2006-103991 | A1 | 05 October 2006 |
| KR | 10-2014-0042107 | A | 07 April 2014 | None | | | |
| JP | 2008-013808 | A | 24 January 2008 | CA | 2656637 | A1 | 10 January 2008 |
| | | | | CA | 2656637 | C | 20 August 2013 |
| | | | | CN | 101484602 | A | 15 July 2009 |
| | | | | CN | 101484602 | B | 03 August 2011 |
| | | | | EP | 2050833 | A1 | 22 April 2009 |
| | | | | EP | 2050833 | B1 | 19 April 2017 |
| | | | | JP | 4466619 | B2 | 26 May 2010 |

Form PCT/ISA/210 (patent family annex) (July 2019)

**INTERNATIONAL SEARCH REPORT**
Information on patent family members

International application No.

**PCT/KR2021/010628**

| Patent document cited in search report | Publication date (day/month/year) | Patent family member(s) | | Publication date (day/month/year) |
|---|---|---|---|---|
| | | KR | 10-0996395 B1 | 24 November 2010 |
| | | KR | 10-2009-0016746 A | 17 February 2009 |
| | | US | 2009-0277544 A1 | 12 November 2009 |
| | | US | 7887649 B2 | 15 February 2011 |
| | | WO | 2008-004453 A1 | 10 January 2008 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Tempering Heat Treatment Effects of Steel Welds. *Journal of Minerals & Materials Characterization & Engineering,* 2011, vol. 10 (8), 755-764